# EUROPEAN PATENT SPECIFICATION

(11) **EP 3 133 779 B1**
(45) Date of publication and mention of the grant of the patent: **12.08.2020**
(21) Application number: 16166813.2
(22) Date of filing: 25.04.2016
(51) Int. Cl.: H04L 12/58

(54) **METHOD, TERMINAL DEVICE, COMPUTER PROGRAM AND RECORDING MEDIUM FOR PLAYING GAME IN CHATTING INTERFACE**
VERFAHREN, ENDGERÄTEVORRICHTUNG, COMPUTERPROGRAMM UND AUFZEICHNUNGSMEDIUM ZUM SPIELEN EINES SPIELS IN EINER CHAT-SCHNITTSTELLE
PROCÉDÉ, DISPOSITIF TERMINAL, PROGRAMME INFORMATIQUE ET SUPPORT D'ENREGISTREMENT PERMETTANT DE JOUER À UN JEU DANS UNE INTERFACE DE CONVERSATION

(30) Priority: 19.08.2015 CN 201510512500
(43) Date of publication of application: 22.02.2017
(73) Proprietor: Xiaomi Inc., Beijing 100085 (CN)
(72) Inventor: LUO, Jixi, 100085 BEIJING (CN); LIN, Jinbin, 100085 BEIJING (CN); SHI, Xiaojian, 100085 BEIJING (CN)
(74) Representative: Cabinet Beau de Loménie

(56) References cited:
- EP-A1- 1 906 345
- EP-A2- 2 015 539

## Description

### TECHNICAL FIELD

The present disclosure relates to the technical field of chatting interface, in particular to a method, a terminal device, a computer program and a recording medium for playing a game in a chatting interface.

### BACKGROUND

Along with more and more functions provided by an instant messaging tool, a user can use the instant messaging tool for multimedia voice chatting, such as voice and video, and can also send a file to a peer, etc. When chatting with the peer by the instant messaging tool, the user usually needs not only to pay attention to the chatting content but often has spare attention. For example, when waiting for a reply from the peer, the waiting seems much too monotonous without fully calling sense organs of the user; therefore, related arts have not bring full play of the functions of a terminal device.

Document EP 2 015 539 A2 discloses instant messaging systems and methods for allowing users to play competitive and collaborative games using an instant messaging client application. A client application may create a user interface screen that includes an instant messaging region for exchanging instant messages and a game region for playing games.

### SUMMARY

The invention is defined in the appended set of claims.

In order to overcome relevant problems in related arts, embodiments of the present disclosure provide a method according to claim 1, a device according to claim 4, computer program according to claim 7 and a recording medium according to claim 8.

The technical solution provided in embodiments of the present disclosure may comprise following beneficial effects: by calling a first game program corresponding to a game mode in a chatting interface of an instant messaging tool, a user can fast switch to the game mode in the chatting interface, and need not to log off the instant messaging tool and then start the corresponding game program, so the chatting interruption between the user and his/her peer(s) is avoided, and the instant chatting is more interesting. And when the first game program is finished, a first game result collected by the first game program as an instant message is sent to the one or more users interacting with the chatting interface, thus the peer(s) is/are able to share the game result of the user, and it improves the interactivity during instant user chatting, and diversifies the functions of the instant messaging tool.

In addition, when a first triggering operation is received, by calling a first game program corresponding to the first triggering operation, the user can play the game in the chatting interface; therefore it provides convenience for the user, and improves the user's chatting experience.

A second game program is directly called in a user interface of the instant messaging tool, therefore, the user can directly participate in the second game program of the chatting peer in the chatting interface of the instant messaging tool, and the interactivity between the user and the chatting peer in a game process is improved.

The chatting interface of instant chatting is displayed in a first display region, and the user interface of the game program is displayed in a second display region, hence, it is ensured that the user can send an instant message in the first display region while playing a game in the second display region; it is avoided the switch between the instant messaging tool and the game program for the user, and also improves the interactivity of the game program between the user and the peer(s) in an instant chatting .

The first game program is displayed in the way a suspended window, so that the user can adjust a position of the user interface corresponding to the first game program in the user interface of instant chatting anytime.

In one particular embodiment, the steps of the method for playing a game in a chatting interface are determined by computer program instructions.

Consequently, according to a further aspect, the invention is also directed to a computer program for executing the steps of a method for playing a game in a chatting interface as described above when this program is executed by a computer.

This program can use any programming language and take the form of source code, object code or a code intermediate between source code and object code, such as a partially compiled form, or any other desirable form.

The invention is also directed to a computer-readable information medium containing instructions of a computer program as described above.

The information medium can be any entity or device capable of storing the program. For example, the support can include storage means such as a ROM, for example a CD ROM or a microelectronic circuit ROM, or magnetic storage means, for example a diskette (floppy disk) or a hard disk.

Alternatively, the information medium can be an integrated circuit in which the program is incorporated, the circuit being adapted to execute the method in question or to be used in its execution.

### BRIEF DESCRIPTION OF THE DRAWINGS

The accompanying drawings herein which are incorporated into and constitute a part of the description, illustrate the embodiments according to the present disclosure, and serve as explaining the principles of the present disclosure together with the description.
Fig. 1A is a flow chart showing a method for playing a game in a chatting interface according to an exemplary embodiment.
Fig. 1B is a first scene graph showing a method for playing a game in a chatting interface according to an exemplary embodiment.
Fig. 1C is a second scene graph showing a method for playing a game in a chatting interface according to an exemplary embodiment.
FIG. 2A is a flow chart showing a method for playing a game in a chatting interface according to an exemplary embodiment I.
FIG. 2B is a schematic diagram showing a display region of a chatting interface according to the exemplary embodiment I.
FIG. 3A is a flow chart showing a method for playing a game in a chatting interface according to an exemplary embodiment II.
FIG. 3B is a schematic diagram showing a display region of a chatting interface according to the exemplary embodiment II.
FIG. 4 is a block diagram showing an device for playing a game in a chatting interface according to an exemplary embodiment.
FIG. 5 is a block diagram showing another device for playing a game in a chatting interface according to an exemplary embodiment.
FIG. 6 is a block diagram showing an device suitable for playing a game in a chatting interface according to an exemplary embodiment.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the invention. Instead, they are merely examples of devices and methods consistent with aspects related to the invention as recited in the appended claims.

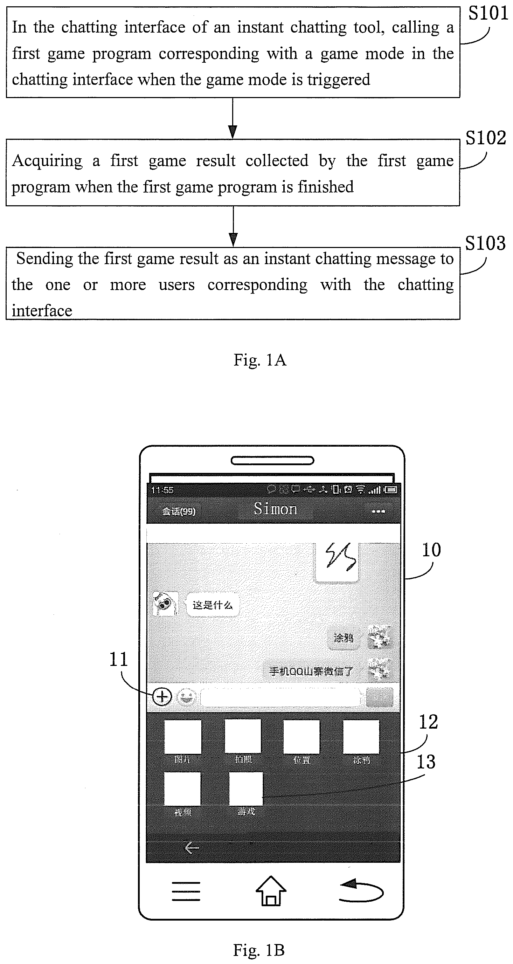

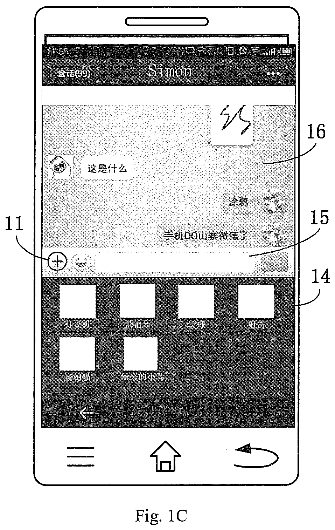

Fig. 1A is a flow chart showing a method for playing a game in a chatting interface according to an exemplary embodiment, Fig. 1B is a first scene graph showing a method for playing a game in a chatting interface according to an exemplary embodiment, and Fig. 1C is a second scene graph showing a method for playing a game in a chatting interface according to an exemplary embodiment; the method for playing the game in the chatting interface can be applied in (or implemented by) a terminal device (for example, a smart phone or a tablet computer), can be realized in a manner of arranging an instant messaging tool on a mobile terminal, and as shown in FIG. 1A, comprises following steps S101-S103:
in step S101, in the chatting interface of the instant messaging tool, calling a first game program corresponding to a game mode in the chatting interface when the game mode is triggered, wherein the chatting interface is a chatting interface between a current user and one or more users other than the current user of the instant messaging tool on the terminal device; and the game mode is a mode for presenting the game in the chatting interface to allow user interaction;
in one embodiment, the instant messaging tool may be an instant chatting software or an instant chatting application program, which can transmit instant text messages between/among two or more users, and the instant text messages sent from users of two communication sides can be instantly displayed on the chatting interfaces of the two communication sides. In one embodiment, as shown in FIG. 1B, it may be monitored that whether a key 11 in the chatting interface is triggered, if the key 11 is triggered, it may be monitored that whether a game key 13 in a game mode is triggered in a tool interface 12, and it enters a game project interface 14 as shown in FIG. 1C after the game key 13 in the game mode is triggered;
in one embodiment, a corresponding interface can be arranged for the instant messaging tool, a game program is accessed into the instant messaging tool, as shown in FIG. 1C, if it has monitored the triggering of a first game program of "plane shooting" in the game project interface 14, the first game program of "plane shooting" is called by a corresponding interface, thus improving compatibility of the instant messaging tool. In another embodiment, at least one game program is arranged in the instant messaging tool, for example, the first game program of the "plane shooting" is a game program arranged in the instant messaging tool, if it has monitored the triggering of the first game program of "plane shooting" in the game project interface 14, the first game program of "plane shooting" is directly called, thus simplifying the interface between the instant messaging tool and the external game program;
in step S102, acquiring a first game result collected by the first game program when the first game program is finished;
in one embodiment, a game result can be acquired by a game program, and the instant messaging tool can acquire the first game result from the game program;
in step 103, sending the first game result as an instant message to the one or more users interacting with (or cooperating with, e.g. by chatting) the chatting interface;
as an exemplary scene, for example, the first game program is "plane shooting", an input box 15 in the chatting interface is changed to a plane, through which bullets can be shot, a display text region 16 can display characters and bubbles, headshots fall down randomly, the score is added if the plane is shot and deducted if not shot, after a preset period, a finally collected first game result, namely plant shooting scores, is collected, and is displayed in the display text region 16. As shown in FIG. 1C, the chatting interface displays that a user is instantly chatting with Simon, the user can send the first game result of plane shooting as an instant chatting massage to Simon, if the chatting interface displays that the user is in group chatting now, the user can send the first game result of plane shooting to other users in the group.

In this embodiment, by calling a first game program corresponding to a game mode in a chatting interface of an instant messaging tool, a current user of the instant messaging tool can quickly switch to the game mode in the chatting interface, and does not need to log off the instant messaging tool and then start the corresponding game program As a result, any chatting interruption between the current user and his/her peer(s) is avoided, and the instant chatting is more interesting; and when the first game program is finished, a first game result collected by the first game program as an instant message is sent to the one or more other users (or peer(s)) of the instant messaging tool interacting with (e.g., chatting with) the current user, thus enabling the peer(s) to access the game result of the user, thereby improving the interactivity during instant user chatting, and diversifying the functions of the instant messaging tool.

In one embodiment, calling a game program corresponding to the game mode in the chatting interface may comprise:
monitoring at least one preset triggering operation at the chatting interface, wherein each preset triggering operation of the at least one preset triggering operation corresponds to a respective preset game program; and
calling the first game program corresponding to a first triggering operation when the first triggering operation is detected, wherein the first triggering operation is one of the preset triggering operations of the at least one game program.

In one embodiment, the method may further comprise:
receiving a second game result from the one or more users in the chatting interface of the instant messaging tool; and
calling a second game program corresponding to the second game result in the chatting interface when a preset triggering operation to the second game result is triggered (or detected).

In one embodiment, the method may further comprise:
determining a first display region of a display region (of the screen) for the first game program, and a second display region of the display region for the chatting interface; and
displaying a user interface corresponding to the first game program in the first display region and displaying the chatting interface in the second display region. The first display region may be part of the chatting interface or separate thereof.

In one embodiment, the method may further comprise:
determining a suspended window for displaying the first game program corresponding to the game mode; and
displaying a user interface corresponding to the first game program on the suspension window.

In the present disclosure, a suspended window may be a new window displayed upon the chatting window. The suspended window may be moved up and down, left or right or any direction. In this way the game interface can be moved by the user, and will not cover a part that the user needs to look at the same time.

How playing the game in the chatting interface can be performed is described later with reference to subsequent embodiments.

So far, according to the method provided in the embodiment of the present disclosure, a user can fast switch to the game mode in the chatting interface, and does not need to log off the instant messaging tool and then start the corresponding game program, so any chatting interruption between the user and his/her peer(s) can be avoided, and the instant chatting is more interesting; a peer can share the game result of the user, and it improves the interactivity during instant user chatting, and diversifies the functions of the instant messaging tool .

Technical solution provided by embodiments of the present disclosure are described in combination with specific embodiments.

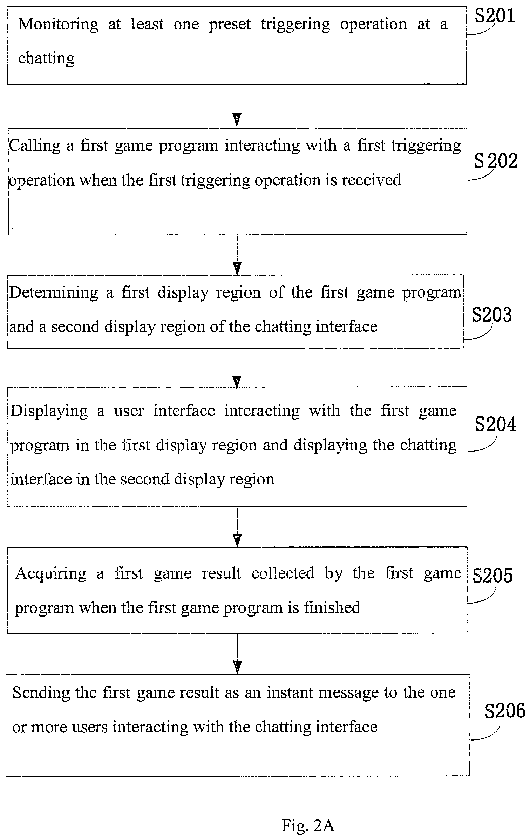

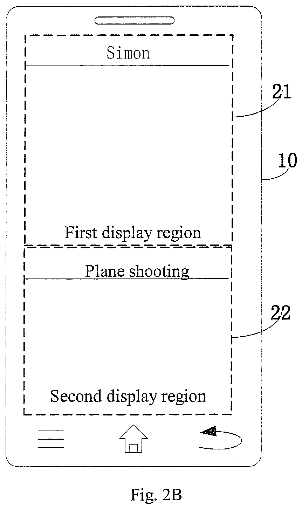

FIG. 2A is a flow chart showing a method for playing a game in a chatting interface according to an exemplary embodiment I and FIG. 2B is a schematic diagram showing a display region of a chatting interface according to the exemplary embodiment I; the method provided in this embodiment of the present disclosure is exemplarily described by the fact of how to display a game program at a chatting interface in combination with FIG. 1B and FIG. 1C, and as shown in FIG. 2A, comprises following steps:
in step S201, monitoring at least one preset triggering operation at the chatting interface, wherein each preset triggering operation of the at least one preset triggering operation corresponds to one preset game program;
in one embodiment, the preset triggering operation can correspond to a plurality of preset game programs in a game project interface, as shown in FIG. 1C, the game project interface 14 comprises "Plane Shooting", "Popping", "Rolling", "Shooting", "Tom Cat" and "Angry Birds", and the preset triggering operation can be a triggering operation of any above game. In one embodiment, the preset triggering operation can be operations of single click, double click , long press and the like;
in step S202, calling the first game program corresponding to a first triggering operation when the first triggering operation is received (or detected), wherein the first triggering operation is one of the preset triggering operations of the at least one game program;
for example, the user triggers a first game program of "plane shooting", if "plane shooting" is a game program external to the instant messaging tool, the game program of "plane shooting" can be called by a corresponding interface; and if "plane shooting" is a game mode built in the instant messaging tool, the game program of "plane shooting" can be directly called. When the first triggering operation is received, by calling the first game program corresponding to the first triggering operation, the user can play game in the chatting interface, and it provides convenience for the user operation and also improves user chatting experience.

It should be noted that the first triggering operation can be the click of specific function key or the special operation in the current chatting interface, for example, by shaking a mobile phone in the current chatting interface, game 1 is called; by sliding up or sliding down or other touch in the current chatting interface, game 2,game 3 or game 4 may be respectively called. Above are only examples and the first triggering operation comprise but are not limited to above manners.

In step S203, determining a first display region of the first game program and a second display region of the chatting interface;
In step S204, displaying a user interface corresponding to the first game program in the first display region and displaying the chatting interface in the second display region;
In step 203 and Step 204, in one embodiment, a placing mode of a display screen of a terminal device can be detected, a manner of the first display region and the second display region can be determined according to the placing mode, for example, if the terminal device is in a vertical placing mode, the first display region is arranged below the display screen, and the second display region is arranged above the display screen, if the terminal device is in a horizontal placing mode, the first display region is arranged at the left side of the display screen, and the second display region is arranged at the right side of the display screen.

Alternatively, in step 203 and step 204, a suspended window for displaying a first game program corresponding to a game mode can be determined, a user interface corresponding to the first game program is displayed on the suspended window, and by displaying the first game program in the way of a suspended window, the user can adjust the position of the user interface corresponding to the first game program in the user interface of instant chatting anytime;
in step S205, acquiring a first game result collected by the first game program when the first game program is finished (or deactivated);
in step S206, sending the first game result as an instant message to the one or more users of the chatting interface other than the current user of the chatting interface.

Relevant description about step 205 and step 206 refers to the above embodiments and is not repeated in detail herein.

As one exemplary scene, as shown in FIG. 2B, when the user chats with Simon instantly the terminal device 10, when it is required to trigger a first game program corresponding to a first triggering operation, a chatting interface of instant chatting can be displayed in a first display region 21, and a user interface of the game program can be displayed in a second display region 22.

According to this embodiment, on the basis of above beneficial effects, by displaying the chatting interface of instant chatting in the first display region and displaying the user of the game program in the second display region, it is ensured that the user can play the game in the second display region while sending an instant message in the first display region, any switching between the instant messaging tool and the game program is avoided for the user, and the interactivity of the game program between the user and the peer(s) in an instant chatting process is thus improved.

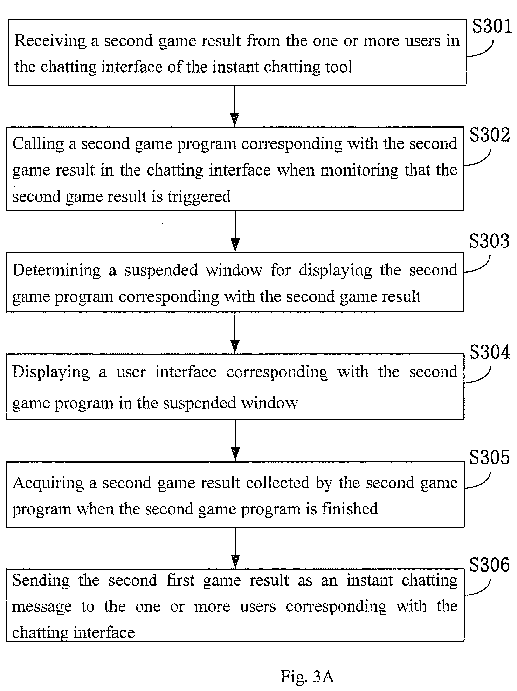

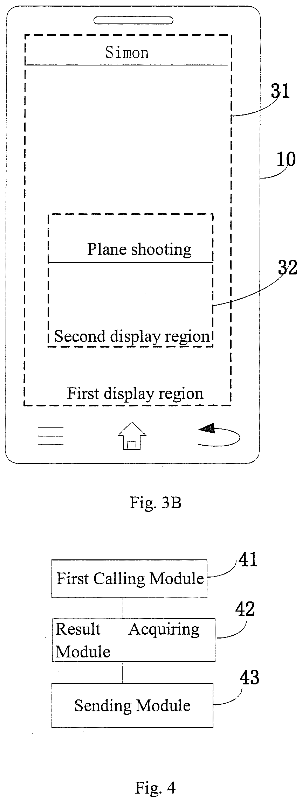

FIG. 3A is a flow chart showing a method for playing a game in a chatting interface according to an exemplary embodiment II, and FIG. 3B is a schematic diagram showing a display region of a chatting interface according to the exemplary embodiment II; the method provided in this embodiment of the present disclosure is exemplarily described by a fact of how to share a game result with other users in a game mode and game together in combination with FIG. 1B and FIG. 1C, and as shown in FIG. 3A, comprises following steps:
in step S301, receiving a second game result from the one or more users in the chatting interface of the instant messaging tool;
in step S302, calling a second game program corresponding to the second game result in the chatting interface when the second game result is triggered;
in step S303, determining a suspended window for displaying the second game program corresponding to the second game result;
in step S304, displaying a user interface corresponding to the second game program in the suspended window;
in step S305, acquiring a second game result collected by the second game program when the second game program is finished (or deactivated);
in step S306, sending the second first game result as an instant message to the one or more users interacting with (or cooperating with) the chatting interface.

As one exemplary scene, as shown in FIG. 1B, if a second game result from Simon is received in the chatting interface of the instant messaging tool, then after the second game result is triggered, a second game program can be directly called in a user interface of the instant messaging tool, thus the user is able to directly participate in the second game program of Simon in the chatting interface of the instant messaging tool, and it improves the interactivity of the user and the chatting peer in a game. As shown in FIG. 3B, when the user chats with Simon instantly by the terminal device 10 and when a first game program of Simon needs to be called, the user interface of the second game program can be displayed in a suspended window 32, and content of instant chatting can be displayed in the chatting interface 31 of the instant messaging tool.

According to this embodiment, on the basis of the above beneficial effects, a second game program can be directly called in a user interface of an instant messaging tool, thus the user is able to directly participate in the second game program of the chatting peer in the chatting interface of the instant messaging tool, and it improves the interactivity of the user and the chatting peer in a game; by displaying a first game program in the way of a suspended window, the user can adjust the position of the user interface corresponding to the first game program in the user interface of instant chatting anytime.

FIG. 4 is a block diagram showing an device for playing a game in a chatting interface according to an exemplary embodiment, which is used for a terminal device provided with an instant messaging tool, as shown in FIG. 4, an device for playing a game on a chatting interface comprises:
a first calling module 41 configured to, in the chatting interface of the instant messaging tool, call a first game program corresponding to a game mode in the chatting interface when the game mode is triggered, wherein the chatting interface is a chatting interface between a current user and one or more users other than the current user of the instant messaging tool on the terminal device; and the game mode is a mode of presenting the game in the chatting interface to allow user interaction;
a result acquiring module 42 configured to acquire a first game result collected by the first game program called by the first calling module 41 when the first game program is finished (or deactivated); and
a sending module 43 configured to send the first game result acquired by the result acquiring module 42 as an instant message to the one or more users corresponding to the chatting interface.

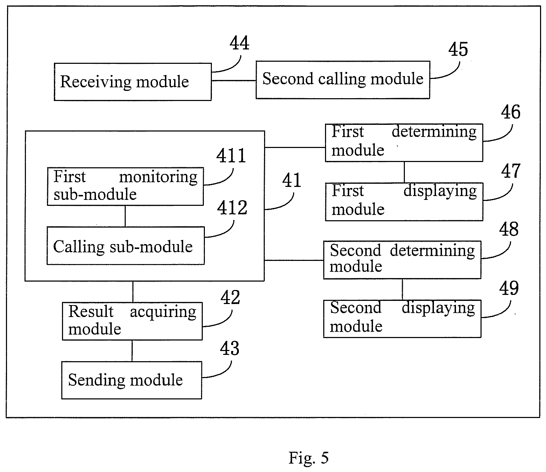

FIG. 5 is a block diagram showing another device for playing a game in a chatting interface according to an exemplary embodiment, as shown in FIG. 5, based on the embodiment as shown in FIG. 4, in one embodiment, the first calling module 41 comprises:
a first monitoring sub-module 411 configured to monitor at least one preset triggering operation at the chatting interface, wherein each preset triggering operation of the at least one preset triggering operation corresponds to one preset game program; and
a calling sub-module 412 configured to call a first game program corresponding to a first triggering operation when the first monitoring sub-module 411 has monitored the first triggering operation, wherein the first triggering operation is one of the preset triggering operations of the at least one game program.

In one embodiment, the device also comprises:
a receiving module 44 configured to receive a second game result from the one or more users in the chatting interface of the instant messaging tool; and
a second calling module 45 configured to call a second game program corresponding to the second game result received by the receiving module 44 in the chatting interface when the second game result is triggered.

In one embodiment, the device also comprises:
a first determining module 46 configured to determine a first display region of the first game program corresponding to the game mode called by the first calling module 41 and a second display region of the chatting interface; and
a first displaying module 47 configured to display a user interface corresponding to the first game program in the first display region determined by the first determining module 46 and display the chatting interface in the second display region.

In one embodiment, the device also comprises:
a second determining module 48 configured to determine a suspended window for displaying the first game program corresponding to the game mode called by the first calling module 41; and
a second displaying module 49 configured to display a user interface corresponding to the first game program on the suspended window determined by the second determining module 48.

With regard to the device in above embodiment, specific ways executable by respective modules have been described in detail in embodiments related to the method, and are not repeated in detail herein.

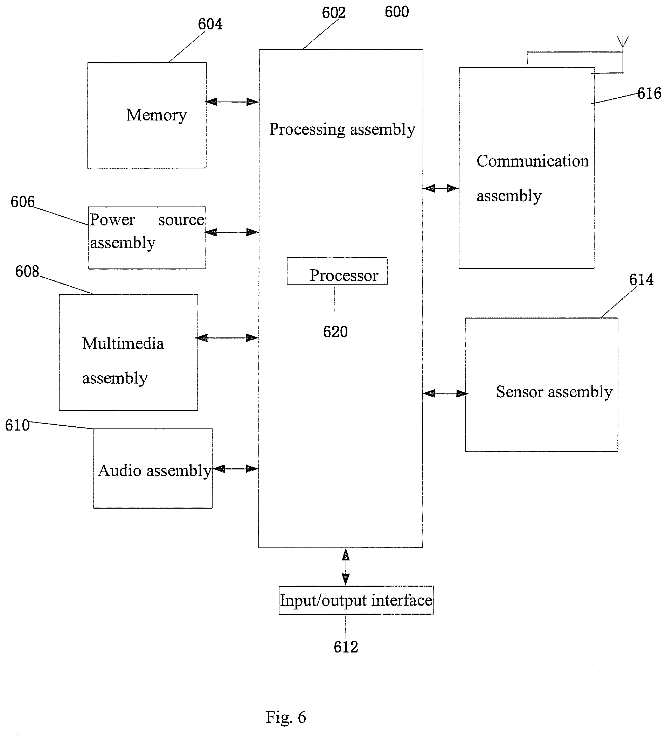

FIG. 6 is a block diagram showing a device suitable for playing a game in a chatting interface according to an exemplary embodiment. For example, device 600 may be a mobile phone, a computer, a digital broadcast terminal, a message transceiver, a game control pad, a tablet device, a medical device, a fitness device, a personnel digital assistant and the like.

With reference to FIG. 6, the device may comprise one or more assemblies: a processing assembly 602, a memory 604, a power source assembly 606, a multimedia assembly 608, an audio assembly 610, an input/output (I/O) interface 612, a sensor assembly 614 and a communication assembly 616.

The processing assembly 602 usually controls integral operation of the device 600, such as display, telephone call, data communication, camera operation, record operation and associated operations. The processing assembly 602 may comprise one or more processors 620 to execute commands, thus finishing all or part of steps in above method. In addition, the processing assembly 602 may comprise one or more modules that are convenient for processing interaction between the processing assembly 602 and other assemblies. For example, the processing assembly 602 comprises a multimedia module, which is convenient for processing interaction between the multimedia assembly 608 and the processing assembly 602.

The memory 604 is configured to store various types of data to support operation on the device 600. Examples of these data comprise commands of any application program or method, data of contact persons, data of a telephone book, messages, pictures, videos and the like, which are capable of being operated on the device 600, The memory 604 can be realized by any types of volatile or nonvolatile memory devices or a combination thereof, such as a static random access memory (SRAM), an electrically erasable programmable read-only memory (EEPROM), an electrically programmable read-only memory (EPROM), a programmable read-only memory (PROM), a read-only memory (ROM), a magnetic memory, a flash memory, a disk or a compact disc.

The power source assembly 606 provides power for various assemblies of the device 600. The power source assembly 606 comprises a power source management system, one or more power sources and other assemblies associated with generation, management and distribution of power for the device 600.

The multimedia assembly 608 comprises a screen between the device 600 and a user and provides an output interface. In some embodiments, the screen may comprise a liquid crystal display (LCD) and a touch panel (TP). If the screen comprises the touch panel, the screen can be realized as a touch screen to receive an input signal from the user. The touch panel comprises one or more touch sensors to sense touching, sliding and touching gestures on the touch panel. The touch sensor can not only sense a boundary of a touching or sliding action, but also can detect duration time and pressure related to the touching or sliding operation. In some embodiments, the multimedia assembly 608 comprises a front-positioned camera and/or a post positioned camera. When the device 600 is in an operation mode, for example, in a shooting mode or a video mode, the front-positioned and/or post-positioned camera can receive external multimedia data. Each front-positioned and post-positioned camera can be a fixed optical lens system or has a focus length or optical zooming capacity.

The audio assembly 610 is configured to output and/or input an audio signal. For example, the audio assembly 610 comprises a microphone (MIC), when the device 600 is in an operation mode, for example, a calling mode, a recording mode and a voice recognition mode, the microphone is configured to receive an external audio signal. The audio signal can be further stored in the memory 604 or be sent by the communication assembly 616. In some embodiments, the audio assembly 610 also comprises a loudspeaker for outputting an audio signal.

The I/O interface 612 provides an interface between the processing assembly 612 and an external interface module; the external interface module may be a keyboard, a click wheel, button and the like. These buttons comprise by are not limited to: a main page button, a volume button, a start button and a lock button.

The sensor assembly 614 comprises one or more sensors which are used for providing various aspects of state evaluations for device 600. For example, the sensor assembly 614 can detect an opening/closing state of device 600 and relative positioning of assemblies, for example, the assemblies are a display and a small keyboard of device 600, the sensor assembly 614 can further detect position change of device 600 or one assembly of device 600, existence or nonexistence of contact between a user and the device 600, direction or speeding up/down of the device 600 and temperature change of device 600. The sensor assembly 614 may comprise a proximity approximate sensor, configured to detect existence of a nearby object without any physical contact. The sensor assembly 614 may also comprise an optical sensor, for example, a complementary metal oxide semiconductor (CMOS) or a charged couple device (CCD) image sensor, used in imaging application. In some embodiments, the sensor assembly 614 further comprises an acceleration sensor, a gyroscope sensor, a magnetic sensor, a pressure sensor or temperature sensor.

The communication assembly 616 is configured to facilitate wired or wireless communication between device 600 and other devices. Device 600 can be accessed to a communication standard-based wireless network, such as WiFi (Wireless Fidelity), 2G (The 2nd Generation Telecommunication) or 3G (The 3rd Generation Telecommunication) or combination thereof. In one exemplary embodiment, the communication assembly 616 receives a broadcast signal or broadcast-related information from an external broadcast system by a broadcast channel. In one exemplary embodiment, the communication assembly 616 further comprises a near field communication (NFC) module to promote short communication. For example, the NFC module can be realized based on a radio frequency identification device (RFID) technique, an infrared data association (IrDA) technique, an ultra-wide band (UWB) technique, a Bluetooth (BT) technique and other techniques.

In an exemplary embodiment, device 600 can be realized by one or more application-specific integrated circuits (ASIC), digital signal processors (DSP), digital signal processing devices (DSPD), programmable logic devices (PLD), field programmable gate arrays (FPGA), controllers, microcontrollers, microprocessors or other electronic elements, which are used for executing the method.

In an exemplary embodiment, there is also provided a non-temporary computer readable storage medium comprising a command, for example, a memory 604 comprising a command, the command is executable by the processor 620 of device 600 to finish above method. For example, the non-temporary computer readable storage medium may be a read only memory (ROM), a random access memory (RAM), a compact disc random access memory (CD-ROM), a magnetic tape, a floppy disk, an optical data storage device and the like.

Other embodiments of the invention will be apparent to those skilled in the art from consideration of the specification and practice of the invention disclosed here.

## Claims

1. A method for playing a game in a chatting interface, applied in a terminal device provided with an instant messaging tool, comprising:
in the chatting interface of the instant messaging tool, calling (S101) a first game program corresponding to a game mode in the chatting interface when the game mode is triggered; wherein the chatting interface is a chatting interface between a current user of the instant messaging tool on the terminal device and one or more users other than said current user, wherein the game mode is a mode for presenting the game in the chatting interface to allow user interaction;
wherein said method is **characterised in that** it further comprises:
acquiring (S102) a first game result collected by the first game program when the first game program is finished; and
sending (S103) the first game result as an instant message to the one or more users interacting with the chatting interface;
wherein said calling the first game program corresponding to the game mode in the chatting interface comprises:
monitoring (S201) at least one preset triggering operation at the chatting interface, wherein each preset triggering operation of the at least one preset triggering operation corresponds to a preset game program; and
calling (S202) the first game program corresponding to a first triggering operation when the first triggering operation is received, wherein the first triggering operation is one of the preset triggering operations of the at least one game program,
wherein the first triggering operation comprises shaking a mobile phone or touching in the current chatting interface;
said method further comprising:
receiving (S301) a second game result from the one or more users in the chatting interface of the instant messaging tool; and
calling (S302) a second game program corresponding to the second game result in the chatting interface when a preset triggering operation to the second game result is triggered.

2. The method according to claim 1, **characterized by** also comprising:
determining (S203) a first display region of a display area for the first game program , and a second display region of the display area for the chatting interface; and
displaying (S204) a user interface corresponding to the first game program in the first display region and displaying the chatting interface in the second display region.

3. The method according to claim 1, **characterized by** also comprising:
determining a suspended window for displaying the first game program corresponding to the game mode; and
displaying a user interface corresponding to the first game program on the suspended window.

4. A device (10) for playing a game in a chatting interface, said device being provided with an instant messaging tool and comprising:
a first calling module (41), configured to, in the chatting interface of the instant messaging tool, call a first game program corresponding to a game mode in the chatting interface when the game mode is triggered; wherein the chatting interface is a chatting interface between a current user of the instant messaging tool on the device and one or more users other than said current user, wherein the game mode is a mode for presenting the game in the chatting interface to allow user interaction;
said device being **characterized in that** it comprises:
a result acquiring module (42) configured to acquire a first game result collected by the first game program called by the first calling module when the first game program is finished; and
a sending module (43) configured to send the first game result acquired by the result acquiring module as an instant message to the one or more users interacting with the chatting interface;
wherein the first calling module (41) comprises:
a first monitoring sub-module (411) configured to monitor at least one preset triggering operation at the chatting interface, wherein each preset triggering operation of the at least one preset triggering operation corresponds to one preset game program; and
a calling sub-module (412) configured to call a first game program corresponding to a first triggering operation when the first monitoring sub-module has monitored the first triggering operation, wherein the first triggering operation is one of the preset triggering operations of the at least one game program,
wherein the first triggering operation comprises shaking a mobile phone or touching in the current chatting interface;
said device (10) further comprising:
a receiving module (44) configured to receive a second game result from one or more users in the chatting interface of the instant messaging tool; and
a second calling module (45) configured to call a second game program corresponding to the second game result received by the receiving module in the chatting interface when a preset triggering operation to the second game result is triggered.

5. The device according to claim 4, **characterized by** also comprising:
a first determining module (46) configured to determine a first display region of the first game program corresponding to the game mode called by the first calling module and a second display region of the chatting interface; and
a first displaying module (47) configured to display a user interface corresponding to the first game program in the first display region determined by the first determining module and display the chatting interface in the second display region.

6. The device according to claim 4, **characterized by** also comprising:
a second determining module (48) configured to determine a suspension window for displaying the first game program corresponding to the game mode called by the first calling module; and
a second displaying module (49) configured to display a user interface corresponding to the first game program on the suspended window determined by the second determining module.

7. A computer program including instructions for executing the steps of a method for playing a game in a chatting interface according to any one of claims 1 to 3 when said program is executed by a computer.

8. A recording medium readable by a computer and having recorded thereon a computer program including instructions for executing the steps of a method for playing a game in a chatting interface according to any one of claims 1 to 3.

## Patentansprüche

1. Verfahren zum Spielen eines Spiels in einer Chat-Schnittstelle, das in einem Endgerät angewendet wird, das mit einem Instant-Messaging-Tool versehen ist, umfassend:
in der Chat-Schnittstelle des Instant-Messaging-Tools Aufrufen (S101) eines ersten Spielprogramms, das einem Spielmodus in der Chat-Schnittstelle entspricht, wenn der Spielmodus ausgelöst wird, wobei die Chat-Schnittstelle eine Chat-Schnittstelle zwischen einem aktuellen Nutzer des Instant-Messaging-Tools auf dem Endgerät und einem oder mehreren Nutzern, bei denen es sich nicht um den aktuellen Nutzer handelt, ist, wobei der Spielmodus ein Modus zum Präsentieren des Spiels in der Chat-Schnittstelle ist, um eine Nutzerinteraktion zu ermöglichen,
wobei das Verfahren **dadurch gekennzeichnet ist, dass** es ferner umfasst:
Beziehen (S102) eines ersten Spielergebnisses, das von dem ersten Spielprogramm gesammelt wird, wenn das erste Spielprogramm beendet wird, und
Senden (S103) des ersten Spielprogramms als eine Instant-Message an den einen oder die mehreren Nutzer, die mit der Chat-Schnittstelle interagieren,
wobei das Aufrufen des ersten Spielprogramms, das dem Spielmodus entspricht, in der Chat-Schnittstelle umfasst:
Überwachen (S201) von mindestens einer voreingestellten Auslösungsoperation an der Chat-Schnittstelle, wobei jede voreingestellte Auslösungsoperation von der mindestens einen voreingestellten Auslösungsoperation einem voreingestellten Spielprogramm entspricht, und
Aufrufen (S202) des ersten Spielprogramms, das einer ersten Auslösungsoperation entspricht, wenn die erste Auslösungsoperation empfangen wird, wobei die erste Auslösungsoperation eine der voreingestellten Auslösungsoperationen des mindestens einen Spielprogramms ist,
wobei die erste Auslösungsoperation das Rütteln eines Mobiltelefons oder Berühren in der aktuellen Chat-Schnittstelle umfasst,
wobei das Verfahren ferner umfasst:
Empfangen (S301) eines zweiten Spielergebnisses von dem einen oder den mehreren Nutzern in der Chat-Schnittstelle des Instant-Messaging-Tools, und
Aufrufen (S302) eines zweiten Spielprogramms, das dem zweiten Spielergebnis entspricht, in der Chat-Schnittstelle, wenn eine voreingestellte Auslösungsoperation zu dem zweiten Spielergebnis ausgelöst wird.

2. Verfahren nach Anspruch 1, **gekennzeichnet dadurch, dass** es außerdem umfasst:
Bestimmen (S203) einer ersten Anzeigeregion eines Anzeigebereichs für das erste Spielprogramm und einer zweiten Anzeigeregion des Anzeigebereichs für die Chat-Schnittstelle, und
Anzeigen (S204) einer Nutzerschnittstelle, die dem ersten Spielprogramm entspricht, in der ersten Anzeigeregion und Anzeigen der Chat-Schnittstelle in der zweiten Anzeigeregion.

3. Verfahren nach Anspruch 1, **gekennzeichnet dadurch, dass** es außerdem umfasst:
Bestimmen eines suspendierten Fensters zum Anzeigen des ersten Spielprogramms, das dem Spielmodus entspricht, und
Anzeigen einer Nutzerschnittstelle, die dem ersten Spielprogramm entspricht, auf dem suspendierten Fenster.

4. Vorrichtung (10) zum Spielen eines Spiels in einer Chat-Schnittstelle, wobei die Vorrichtung mit einem Instant-Messaging-Tool versehen ist und umfasst:
ein erstes Aufrufmodul (41), das dazu ausgestaltet ist, in der Chat-Schnittstelle des Instant-Messaging-Tools ein erstes Spielprogramm, das einem Spielmodus in der Chat-Schnittstelle entspricht, aufzurufen, wenn der Spielmodus ausgelöst wird, wobei die Chat-Schnittstelle eine Chat-Schnittstelle zwischen einem aktuellen Nutzer des Instant-Messaging-Tools auf der Vorrichtung und einem oder mehreren Nutzern, bei denen es sich nicht um den aktuellen Nutzer handelt, ist, wobei der Spielmodus ein Modus zum Präsentieren des Spiels in der Chat-Schnittstelle ist, um eine Nutzerinteraktion zu ermöglichen,
wobei die Vorrichtung **dadurch gekennzeichnet ist, dass** sie umfasst:
ein Ergebnisbezugsmodul (42), das dazu ausgestaltet ist, ein erstes Spielergebnis, das von dem ersten Spielprogramm gesammelt wird, das von dem ersten Aufrufmodul aufgerufen wird, zu beziehen, wenn das erste Spielprogramm beendet wird, und
ein Sendemodul (43), das dazu ausgestaltet ist, das erste Spielprogramm, das von dem Ergebnisbezugsmodul bezogen wird, als eine Instant-Message an den einen oder die mehreren Nutzer zu senden, die mit der Chat-Schnittstelle interagieren,
wobei das erste Aufrufmodul (41) umfasst:
ein erstes Überwachungsteilmodul (411), das dazu ausgestaltet ist, mindestens eine voreingestellte Auslösungsoperation an der Chat-Schnittstelle zu überwachen, wobei jede voreingestellte Auslösungsoperation von der mindestens einen voreingestellten Auslösungsoperation einem voreingestellten Spielprogramm entspricht, und
ein Aufrufteilmodul (412), das dazu ausgestaltet ist, ein erstes Spielprogramm, das einer ersten Auslösungsoperation entspricht, aufzurufen, wenn das erste Überwachungsteilmodul die erste Auslösungsoperation überwacht hat, wobei die erste Auslösungsoperation eine der voreingestellten Auslösungsoperationen des mindestens einen Spielprogramms ist,
wobei die erste Auslösungsoperation das Rütteln eines Mobiltelefons oder Berühren in der aktuellen Chat-Schnittstelle umfasst,
wobei die Vorrichtung (10) ferner umfasst:
ein Empfangsmodul (44), das dazu ausgestaltet ist, ein zweites Spielergebnis von einem oder mehreren Nutzern in der Chat-Schnittstelle des Instant-Messaging-Tools zu empfangen, und
ein zweites Aufrufmodul (45), das dazu ausgestaltet ist, ein zweites Spielprogramm, das dem zweiten Spielergebnis entspricht, das von dem Empfangsmodul empfangen wird, in der Chat-Schnittstelle aufzurufen, wenn eine voreingestellte Auslösungsoperation zu dem zweiten Spielergebnis ausgelöst wird.

5. Vorrichtung nach Anspruch 4, **gekennzeichnet dadurch, dass** sie außerdem umfasst:
ein erstes Bestimmungsmodul (46), das dazu ausgestaltet ist, eine erste Anzeigeregion des ersten Spielprogramms, das dem Spielmodus entspricht und von dem ersten Aufrufmodul aufgerufen wird, und eine zweite Anzeigeregion der Chat-Schnittstelle zu bestimmen, und
ein erstes Anzeigemodul (47), das dazu ausgestaltet ist, eine Nutzerschnittstelle, die dem ersten Spielprogramm entspricht, in der ersten Anzeigeregion, die von dem ersten Bestimmungsmodul bestimmt wird, anzuzeigen und die Chat-Schnittstelle in der zweiten Anzeigeregion anzuzeigen.

6. Vorrichtung nach Anspruch 4, **gekennzeichnet dadurch, dass** sie außerdem umfasst:
ein zweites Bestimmungsmodul (48), das dazu ausgestaltet ist, ein Suspensionsfenster zum Anzeigen des ersten Spielprogramms, das dem Spielmodus entspricht und von dem ersten Aufrufmodul aufgerufen wird, zu bestimmen, und
ein zweites Anzeigemodul (49), das dazu ausgestaltet ist, eine Nutzerschnittstelle, die dem ersten Spielprogramm entspricht, auf dem suspendierten Fenster, das von dem zweiten Bestimmungsmodul bestimmt wird, anzuzeigen.

7. Computerprogramm, das Anweisungen zum Ausführen der Schritte eines Verfahrens zum Spielen eines Spiels in einer Chat-Schnittstelle nach einem der Ansprüche 1 bis 3 beinhaltet, wenn das Programm von einem Computer ausgeführt wird.

8. Aufzeichnungsmedium, das von einem Computer gelesen werden kann und auf dem ein Computerprogramm aufgezeichnet ist, das Anweisungen zum Ausführen der Schritte eines Verfahrens zum Spielen eines Spiels in einer Chat-Schnittstelle nach einem der Ansprüche 1 bis 3 beinhaltet.

## Revendications

1. Procédé pour jouer à un jeu dans une interface de discussion, appliqué dans un dispositif terminal pourvu d'un outil de messagerie instantanée, comprenant les étapes suivantes :
dans l'interface de discussion de l'outil de messagerie instantanée, appeler (S101) un premier programme de jeu correspondant à un mode de jeu dans l'interface de discussion lorsque le mode de jeu est déclenché ; dans lequel l'interface de discussion est une interface de discussion entre un utilisateur actuel de l'outil de messagerie instantanée sur le dispositif terminal et un ou plusieurs utilisateurs autres que ledit utilisateur actuel, dans lequel le mode de jeu est un mode pour présenter le jeu dans l'interface de discussion afin de permettre une interaction d'utilisateur ;
dans lequel ledit procédé est **caractérisé en ce qu'**il comprend en outre les étapes suivantes :
acquérir (S102) un premier résultat de jeu recueilli par le premier programme de jeu lorsque le premier programme de jeu est terminé ; et
envoyer (S103) le premier résultat de jeu sous la forme d'un message instantané aux un ou plusieurs utilisateurs qui interagissent avec l'interface de discussion ;
dans lequel ledit appel du premier programme de jeu correspondant au mode de jeu dans l'interface de discussion comprend les étapes suivantes :
surveiller (S201) une ou plusieurs opérations de déclenchement prédéfinies sur l'interface de discussion, dans lequel chaque opération de déclenchement prédéfinie des une ou plusieurs opérations de déclenchement prédéfinies correspond à un programme de jeu prédéfini ; et
appeler (S202) le premier programme de jeu correspondant à une première opération de déclenchement lorsque la première opération de déclenchement est reçue, dans lequel la première opération de déclenchement est l'une des opérations de déclenchement prédéfinies de l'au moins un programme de jeu,
dans lequel la première opération de déclenchement comprend le fait de secouer un téléphone mobile ou de toucher l'interface de discussion actuelle ;
ledit procédé comprenant en outre les étapes suivantes :
recevoir (S301) un deuxième résultat de jeu de la part des un ou plusieurs utilisateurs dans l'interface de discussion de l'outil de messagerie instantanée ; et
appeler (S302) un deuxième programme de jeu, correspondant au deuxième résultat de jeu, dans l'interface de discussion, lorsqu'une opération de déclenchement prédéfinie du deuxième résultat de jeu est déclenchée.

2. Procédé selon la revendication 1, **caractérisé en ce qu'**il comprend également les étapes suivantes :
déterminer (S203) une première région d'affichage d'une zone d'affichage pour le premier programme de jeu, et une deuxième région d'affichage de la zone d'affichage pour l'interface de discussion ; et
afficher (S204) une interface utilisateur correspondant au premier programme de jeu dans la première région d'affichage et afficher l'interface de discussion dans la deuxième région d'affichage.

3. Procédé selon la revendication 1, **caractérisé en ce qu'**il comprend également les étapes suivantes :
déterminer une fenêtre suspendue pour afficher le premier programme de jeu correspondant au mode de jeu ; et
afficher une interface utilisateur correspondant au premier programme de jeu sur la fenêtre suspendue.

4. Dispositif (10) pour jouer à un jeu dans une interface de discussion, ledit dispositif étant pourvu d'un outil de messagerie instantanée et comprenant :
un premier module d'appel (41), configuré pour, dans l'interface de discussion de l'outil de messagerie instantanée, appeler un premier programme de jeu correspondant à un mode de jeu dans l'interface de discussion lorsque le mode de jeu est déclenché ; dans lequel l'interface de discussion est une interface de discussion entre un utilisateur actuel de l'outil de messagerie instantanée sur le dispositif et un ou plusieurs utilisateurs autres que ledit utilisateur actuel, dans lequel le mode de jeu est un mode pour présenter le jeu dans l'interface de discussion afin de permettre une interaction d'utilisateur ;
ledit dispositif étant **caractérisé en ce qu'**il comprend :
un module d'acquisition de résultat (42) configuré pour acquérir un premier résultat de jeu recueilli par le premier programme de jeu appelé par le premier module d'appel, lorsque le premier programme de jeu est terminé ; et
un module d'envoi (43) configuré pour envoyer le premier résultat de jeu acquis par le module d'acquisition de résultat sous la forme d'un message instantané aux un ou plusieurs utilisateurs interagissant avec l'interface de discussion ;
dans lequel le premier module d'appel (41) comprend :
un premier sous-module de surveillance (411) configuré pour surveiller une ou plusieurs opérations de déclenchement prédéfinies sur l'interface de discussion, dans lequel chaque opération de déclenchement prédéfinie des une ou plusieurs opérations de déclenchement prédéfinies correspond à un programme de jeu prédéfini ; et
un sous-module d'appel (412) configuré pour appeler un premier programme de jeu correspondant à une première opération de déclenchement, lorsque le premier sous-module de surveillance a surveillé la première opération de déclenchement, dans lequel la première opération de déclenchement est l'une des opérations de déclenchement prédéfinies de l'au moins un programme de jeu
dans lequel la première opération de déclenchement comprend le fait de secouer un téléphone mobile ou de toucher l'interface de discussion actuelle ;
ledit dispositif (10) comprenant en outre :
un module de réception (44) configuré pour recevoir un deuxième résultat de jeu de la part d'un ou plusieurs utilisateurs dans l'interface de discussion de l'outil de messagerie instantanée ; et
un deuxième module d'appel (45) configuré pour appeler un deuxième programme de jeu correspondant au deuxième résultat de jeu reçu par le module de réception dans l'interface de discussion, lorsqu'une opération de déclenchement prédéfinie du deuxième résultat de jeu est déclenchée.

5. Dispositif selon la revendication 4, **caractérisé en ce qu'**il comprend également :
un premier module de détermination (46) configuré pour déterminer une première région d'affichage du premier programme de jeu correspondant au mode de jeu appelé par le premier module d'appel, et une deuxième région d'affichage de l'interface de discussion ; et
un premier module d'affichage (47) configuré pour afficher une interface utilisateur correspondant au premier programme de jeu dans la première région d'affichage déterminée par le premier module de détermination, et pour afficher l'interface de discussion dans la deuxième région d'affichage.

6. Dispositif selon la revendication 4, **caractérisé en ce qu'**il comprend également :
un deuxième module de détermination (48) configuré pour déterminer une fenêtre de suspension pour afficher le premier programme de jeu correspondant au mode de jeu appelé par le premier module d'appel ; et
un deuxième module d'affichage (49) configuré pour afficher une interface utilisateur correspondant au premier programme de jeu sur la fenêtre suspendue déterminée par le deuxième module de détermination.

7. Programme informatique comportant des instructions pour exécuter les étapes d'un procédé pour jouer à un jeu dans une interface de discussion selon l'une quelconque des revendications 1 à 3 lorsque ledit programme est exécuté par un ordinateur.

8. Support d'enregistrement lisible par un ordinateur et sur lequel est enregistré un programme informatique comportant des instructions pour exécuter les étapes d'un procédé pour jouer à un jeu dans une interface de discussion selon l'une quelconque des revendications 1 à 3.
